# EUROPEAN PATENT APPLICATION

(11) **EP 4 545 663 A1**
(43) Date of publication of application: **30.04.2025**
(21) Application number: 23826909.6
(22) Date of filing: 29.05.2023
(51) Int. Cl.: C22C 33/02, B33Y 10/00, B33Y 80/00, B29C 64/386, B22F 10/38, B22F 10/47, C22C 1/08, G10K 11/16

(54) **POROUS STRUCTURAL BODY, POROUS STRUCTURAL BODY FOR REDUCING AERODYNAMIC NOISE, POROUS STRUCTURAL BODY MANUFACTURING METHOD**

(30) Priority: 23.06.2022 JP 2022101017
(71) Applicant: Japan Aerospace Exploration Agency, Tokyo 182-8522 (JP)
(72) Inventor: TAKAISHI, Takehisa, Chofu-shi, Tokyo 182-8522 (JP); FUKAYA, Kazuki, Chofu-shi, Tokyo 182-8522 (JP); ITO, Yasushi, Chofu-shi, Tokyo 182-8522 (JP); SHIMODA, Keiji, Chofu-shi, Tokyo 182-8522 (JP)
(74) Representative: Michalski Hüttermann & Partner Patentanwälte mbB
(86) International application number: PCT/JP2023/019847
(87) International publication number: WO 2023/248721

(57) **Abstract**

To provide a technology or the like capable of quickly creating a structure suitable for aerodynamic noise reduction, a porous structure according to the present technology is produced by a three-dimensional printer based on data of a porous structure suitable for aerodynamic noise reduction under specific conditions, the data being created based on software for creating mesh structures used in computational fluid dynamics.

## Description

### Technical Field

The present technology relates to a technology of porous structures for aerodynamic noise reduction or the like.

### Background Art

Conventionally, it has been known that structures for aerodynamic noise reduction are attached to the surfaces of objects and the like.

For example, Patent Literature 1 below discloses that aerodynamic noise can be reduced by attaching porous material to portions of railroad vehicles, automobiles, aircraft, and the like.

### Citation List

### Patent Literature

Patent Literature 1: Japanese Patent Application Laid-open No. 2008-136332

### Disclosure of Invention

### Technical Problem

In such fields, there is a need for a technology or the like capable of quickly creating a structure suitable for aerodynamic noise reduction.

Given the circumstances described above, the objective of the present technology is to provide a technology or the like capable of quickly creating a structure suitable for aerodynamic noise reduction. Solution to Problem

According to the present technology, a porous structure is created by a three-dimensional printer based on data of a porous structure suitable for aerodynamic noise reduction under specific conditions. The data is created based on software for creating mesh structures in computational fluid dynamics.

This technology makes it possible to easily create a porous structure suitable for aerodynamic noise reduction.

The porous structure may be formed of a mesh with hexahedral elements.

The hexahedral elements may be formed in the porous structure by dividing tetrahedral elements into multiple hexahedral elements.

In the porous structure, when the tetrahedral elements are divided into multiple hexahedral elements, for each of the four triangles of every tetrahedral element, three column elements may be added; these three column elements connecting three first points on the three column elements of the triangle, and a single second point inside the triangle.

In the porous structure, when the tetrahedral elements are divided into multiple hexahedral elements, four column elements may further be added for every tetrahedral element, the four column elements connecting the four second points inside the four triangles in the tetrahedral element and a single third point inside the tetrahedral element.

The porous structure may be formed according to the shape of an object to which the porous structure is to be attached.

The porous structure may include mounting seats for attaching the porous structure to an object.

Preliminary data may be generated using the software in the porous structure, where tetrahedral elements are used for discretization. The preliminary data can then be processed to divide the tetrahedral elements into multiple hexahedral elements. As a result, data can be generated for the porous structure that uses hexahedral elements for discretization.

In the porous structure, when tetrahedral elements are divided into multiple hexahedral elements in the software, for each of the four triangles of every tetrahedral element, three column elements may be added; these three column elements connect three first points on the three column elements of the triangle and a single second point inside the triangle.

In the porous structure, when tetrahedral elements are divided into multiple hexahedral elements in the software, four column elements may further be added for every tetrahedral element; these four column elements connect the four second points inside the four triangles of the tetrahedral element and a single third point inside the tetrahedral element.

In the porous structure, the software may be MEGG3D.

The porous structure may be used in the aircraft.

According to the present technology, a porous structure for aerodynamic noise reduction is composed of a mesh with hexahedral elements; these hexahedral elements are formed by dividing tetrahedral elements into multiple hexahedral elements.

According to the present technology, manufacturing porous structures includes creating data of a porous structure suitable for aerodynamic noise reduction under an actual condition based on software for creating mesh structures used in computational fluid dynamics and creating porous structures by a three-dimensional printer based on the created data. Advantageous Effects of Invention

As described above, according to the present technology, it is possible to provide a technology or the like capable of quickly creating porous structures suitable for aerodynamic noise reduction.

### Brief Description of Drawings

[Fig. 1] Fig. 1 shows a porous structure manufacturing method.
[Fig. 2] Fig. 2 shows a tetrahedral element divided into hexahedral elements using MEGG3D.
[Fig. 3] Fig. 3 shows a porous structure generated by a 3D printer.
[Fig. 4] Fig. 4 is a perspective view showing an example in which the porous structure is made of metal.
[Fig. 5] Fig. 5 is a top view showing an example in which the porous structure is made of metal.
[Fig. 6] Fig. 6 shows an example of the porous structure.
[Fig. 7] Fig. 7 shows a distribution of the lengths of the column elements of the hexahedral elements in the porous structure.
[Fig. 8] Fig. 8 shows a porous structure attached to an aircraft.
[Fig. 9] Fig. 9 shows the second comparative example.
[Fig. 10] Fig. 10 shows the third comparative example. Mode(s) for Carrying Out the Invention

Hereinafter, an embodiment of the present technology is described with reference to the figures.

### <<First Embodiment>>

### <Method of Manufacturing Porous Structure 10>

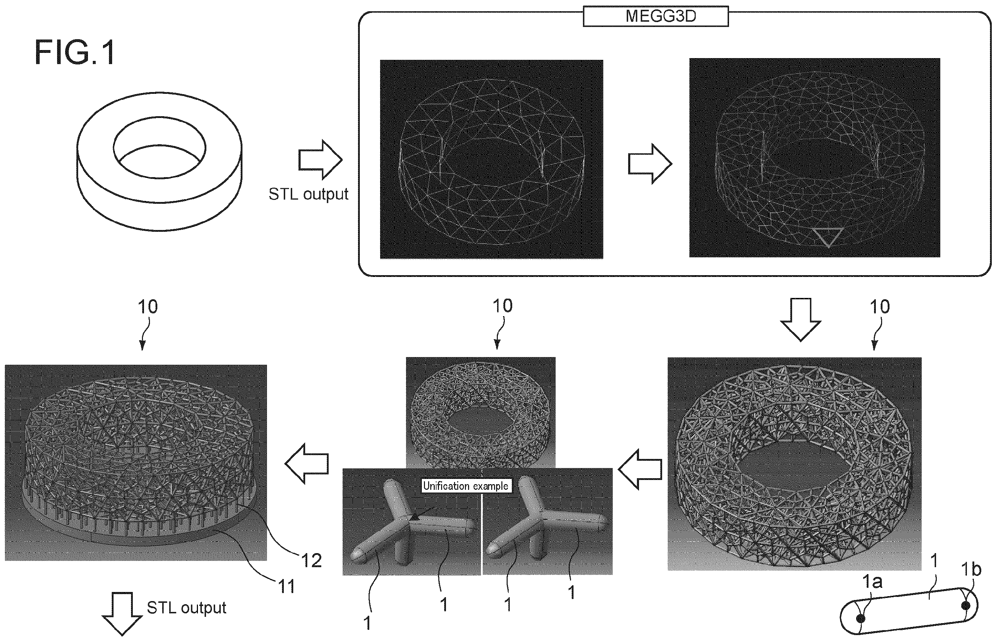

First, a method of manufacturing a porous structure 10 is described according to the first embodiment of the present technology. Fig. 1 shows a method of manufacturing the porous structure 10.

The data representing the external shape of the porous structure 10 is initially created as a three-dimensional (3D) model, as illustrated in Fig. 1 (upper left corner). In this example, the porous structure 10 is depicted as a cylindrical porous structure with a predetermined thickness, designed to be attached to a cylinder (not shown) that extends in one direction.

The shape of the porous structure 10 can be any shape. Note that a 3D printer is used in this embodiment, as will be described later, and thus, any shape can be typically adaptable as the shape of the porous structure 10, and a desired shape can also be easily created.

Once the data of the 3D model (external form) of the porous structure 10 is created, this data is then exported as a stereolithography (STL) file imported to MEGG3D. MEGG3D is software for creating mesh structures (obtained by combining column elements) used in computational fluid dynamics (CFD), which the Japan Aerospace Exploration Agency (JAXA: registered trademark) has developed. The software for creating mesh structures in computational fluid dynamics (CFD) is not limited to MEGG3D; other software may be used.

MEGG3D is capable of creating data of the porous structure 10 suitable for aerodynamic noise reduction based on flow information predicted by CFD simulations under various conditions (e.g., flight speed and altitude of an aircraft 20) at the location where the porous structure 10 is to be attached.

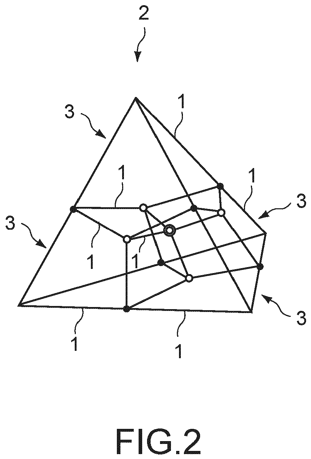

In MEGG3D, first, preliminary data of the porous structure 10 with tetrahedral elements 2 (see also Fig. 2 to be described later) is generated (upper center of Fig. 1) according to the 3D model (external form) of the porous structure 10.

The shapes of tetrahedral elements 2 in the preliminary data vary while considering fluid flow in CFD and aerodynamic noise reduction. Each tetrahedral element 2 is non-uniform and irregular and does not have to be a regular tetrahedron.

Next, in MEGG3D, each tetrahedral element 2 in the preliminary data is divided into multiple (four) hexahedral elements 3 (see also Fig. 2 to be described later) to generate the data of the porous structure 10 with hexahedral element 3 (upper right side of Fig. 1).

Similar to the tetrahedral elements 2, the shapes of the hexahedral elements 3 in this data vary while considering fluid flow in CFD and aerodynamic noise reduction. Each hexahedral element 3 is non-uniform and irregular and does not have to be a regular hexahedron.

Fig. 2 shows a tetrahedral element 2 divided into hexahedral elements 3 using MEGG3D.

As shown in Fig. 2, when the tetrahedral element 2 is divided into multiple (four) hexahedral elements 3 using MEGG3D, for each of the four triangles of the tetrahedral element 2, three first points on the three column elements 1 of the triangle (see the black circles) are first determined. Note that the first point divides each of the three column elements 1 into two column elements 1.

The first point is near the midpoint of each column element 1 of the triangle, but it is not considered located at the exact midpoint because of the variation in shapes of elements described above. Triangles next to each other have a common column element 1, and one first point is determined for that column element 1. Therefore, for one tetrahedral element 2, the total number of first points is six (4×3/2).

Next, for each of the four triangles of the tetrahedral element 2, a single second point inside the triangle (see the white circle) is determined. The second point is near the center of the triangle, but it is not considered to be located at the exact center because of the variation in elements' shapes described above. The total number of second points in the tetrahedral element 2 is four.

Next, for each of the four triangles of the tetrahedral element 2, three column elements 1 connecting the three first points (see the black circles) and the single second point (see the white circle) are determined. The total number of column elements 1 added to the tetrahedral element 2 in this step is 12 (4×3).

Next, a third point inside the tetrahedral element 2 (see the double circle) is determined. The third point is near the center of the tetrahedron but is not considered located at the exact center because of the variation in elements' shapes described above. Next, four column elements 1, connecting the four second points (see white circles) and the single third point, are added further.

In such a manner, the single tetrahedral element 2 is divided into the four hexahedral elements 3 in MEGG3D.

Note that the term of the column element 1 is used herein to mean a column component constituting each side of the hexahedral element 3 unless otherwise explicitly stated.

The coordinates of a start point 1a and an end point 1b of each column element 1 of the hexahedral elements 3 in the porous structure 10 created by MEGG3D are output as text information to computer-aided design (CAD) software (e.g., computer graphics aided three-dimensional interactive application (CATIA): registered trademark) (lower right corner of Fig. 1).

Note that the coordinates of the start point 1a and the end point 1b of each column element 1 in the CAD software can also be output to spreadsheet software (e.g., Excel (registered trademark)) and then linked. In this case, updating the coordinates of the start point 1a and the end point 1b on the spreadsheet software also makes it possible to partially change the shape of the hexahedral element 3 and partially adjust the porosity manually for optimization.

Next, unification processing (summing processing) of the column elements 1 is executed in the CAD software (lower center of Fig. 1). In other words, since the column elements 1 merely overlap each other at this point, the unification processing is executed for unifying the column elements 1. This unification processing eliminates an overlapping portion where the column elements 1 overlap, and a valley line (indicated by the black arrow) is generated at the intersection of the column elements 1 on the CAD software. Note that the unification processing is performed for each column element 1, which can be automatically processed by a macro.

This unification processing can reduce the volume of STL data that is ultimately output to the 3D printer and also prevents errors caused by the 3D printer.

Next, additional components, aside from the porous structure 10, are incorporated using the CAD software (as shown in the lower left corner of Fig. 1). In this example, a base 11 is positioned below the porous structure 10, along with columns 12 that connect the base 11 to the porous structure 10. It is important to note that mounting seats (not shown) or similar features for attaching the porous structure 10 to an object can also be included.

Next, the porous structure 10 data generated in the CAD software (including the porous structure 10 made of hexahedral elements 3 and the other components 11 and 12) is exported to the 3D printer as an STL file. The 3D printer then three-dimensionally forms the porous structure 10 (modeled object including the porous structure 10) based on the input data.

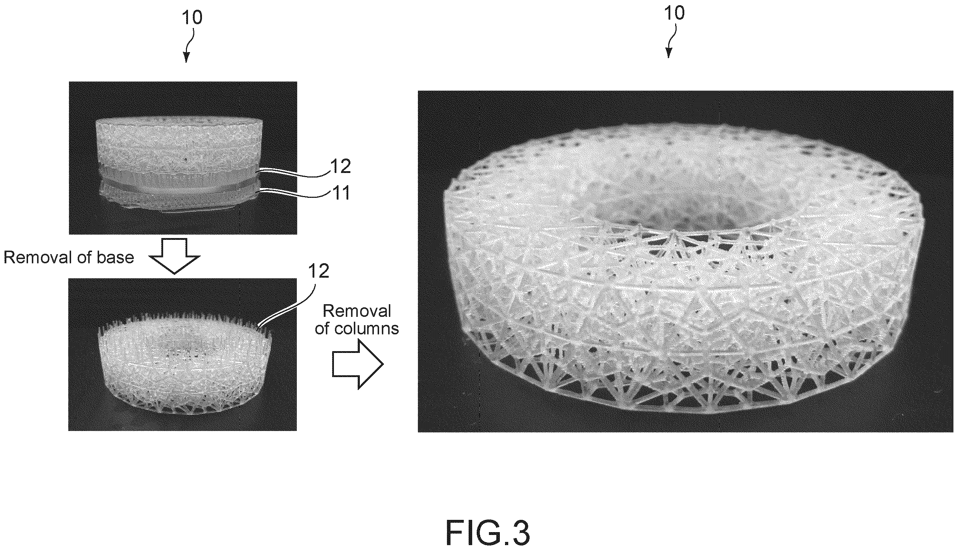

Fig. 3 shows the porous structure 10 generated by the 3D printer. As shown in Fig. 3, the base 11 and columns 12 on the lower side of the porous structure 10 are first removed from the modeled object, including the porous structure 10 generated by the 3D printer, so the porous structure 10 is manufactured.

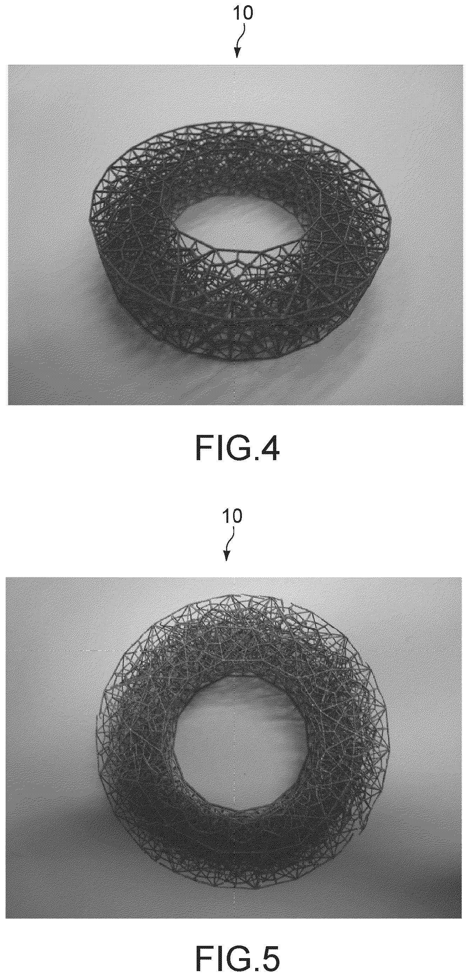

Note that Fig. 3 shows an example of the porous structure 10 made of resin. Fig. 4 is a perspective view showing an example in which the porous structure 10 is made of metal (SUS) (column elements 1 have a diameter of 0.2 mm). In addition, Fig. 5 is a top view showing an example in which the porous structure 10 is made of metal (SUS) (column elements have a diameter of 0.2 mm).

### <Configuration of Porous structure 10>

Next, a configuration of the porous structure 10 is described.

The porous structure 10, according to the present technology, is manufactured using the manufacturing method described above. Therefore, the porous structure 10, according to the present technology, is created by the 3D printer based on the data of a porous structure 10 suitable for aerodynamic noise reduction under specific conditions (e.g., flight speed and altitude of an aircraft 20), the data being created based on software for creating mesh structures used in computational fluid dynamics.

Further, the porous structure 10 comprises a mesh with hexahedral elements 3. In addition, each hexahedral element 3 is formed by dividing a tetrahedral element 2 into multiple (four) hexahedral elements 3.

When the tetrahedral element 2 is divided into the hexahedral elements 3, the following column elements 1 are added to the six column elements 1 of the tetrahedral element 2. Note that each of the six column elements of the tetrahedral element 2 is divided into two column elements 1 by the first point.

In other words, when the tetrahedral element 2 is divided into the hexahedral elements 3, for each of the four triangles of the tetrahedral element 2, three column elements 1 are added, which connect three first points on the three column elements 1 of the triangle (see the black circles of Fig. 2) and a single second point inside the triangle (see the white circle of Fig. 2) (12 column elements 1 in total).

In addition, when the tetrahedral element 2 is divided into the hexahedral elements 3, four column elements 1 are further added, which connect the four second points inside the four triangles of the tetrahedral element 2 (see the white circles of Fig. 2) and a single third point inside the tetrahedral element 2 (see the double circle of Fig. 2).

The porous structure 10 can be made of various materials, such as resin and metal. The porous structure 10 may be made entirely of the same material or partially of different materials.

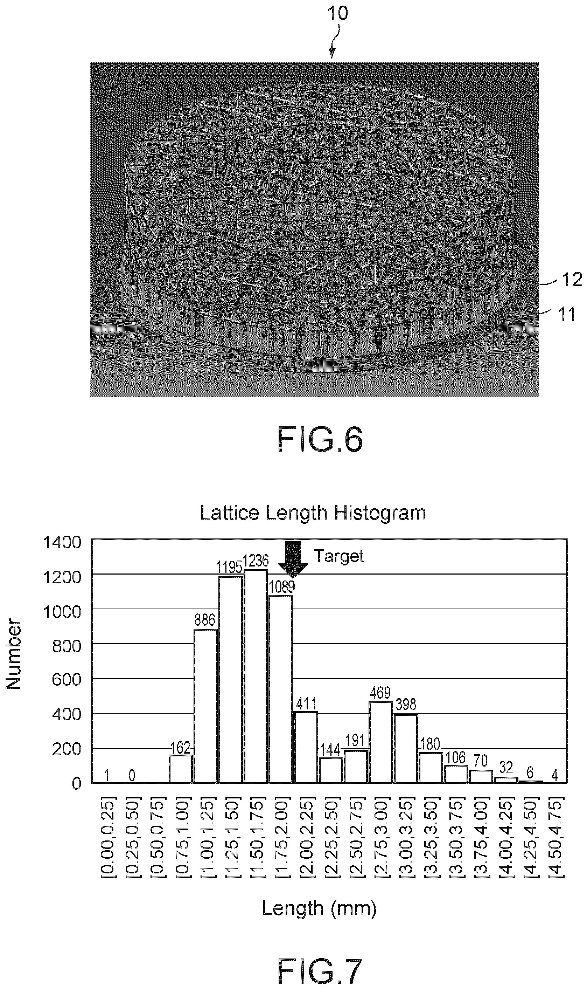

Fig. 6 shows an example of the porous structure 10.

In this porous structure 10, the porosity was set to 83%. Here, it is known that a higher porosity is more effective in reducing aerodynamic noise. Typically, the porosity is set to 80% or higher. Note that when the number of polyhedral elements, each with n faces, is consistent in a given volume, the porosity increases as the value of n rises.

A tetrahedral element 2 has n = 4, and it is difficult to increase the porosity (there is a difference in porosity of 10% to 20% when filling a given volume with the same number of tetrahedral elements 2 or hexahedral elements 3). In addition, the porous structure 10 may be filled with polyhedral elements with larger n, such as pentahedral, heptahedral, and octahedral elements, which is generally difficult to obtain.

In this regard, hexahedral elements 3 are employed in this embodiment. With hexahedral elements 3, the porosity can be set to a relatively high value. In addition, hexahedral elements 3 can be formed by dividing the tetrahedral element 2 into multiple (four) pieces, which can thus be easily created.

In addition, in the example shown in Fig. 6, resin (Vitra-413: model number of resin manufactured by DWS (registered trademark)) was used as the material of the porous structure 10. Additionally, the outer diameter of the porous structure 10 was 45 mm, the inner diameter was 25 mm, and the thickness was 10 mm. Further, the diameter of column elements 1 of the hexahedral elements 3 was 0.5 mm, and the target length of the column elements 1 was 2 mm. Note that the columns 12 formed on the base 11 were set to have a diameter of 0.4 mm.

It is understood that aerodynamic noise reduction is more effective when the number of polyhedral elements ranges from approximately 11 to 16 in 25 mm (1 inch). In this example, the target length of column elements 1 was set to 2 mm, corresponding to about 25.4 mm divided by 13 polyhedral elements. As described above, the shape of the hexahedral elements 3 in the porous structure 10 vary. Therefore, there is a distribution in the actual column element 1 lengths.

Fig. 7 shows a distribution of the lengths of the column elements 1 of the hexahedral element 3. In Fig. 7, the horizontal axis represents the range of the column element 1 lengths, and the vertical axis represents the number of column elements 1 with lengths included within that range. In this example, the total number of column elements 1 in the porous structure 10 was approximately 6000. In addition, the mean value of the column element lengths 1 was 1.97 mm, and the median value was 1.72 mm.

Fig. 7 shows that the column element 1 lengths are distributed around the target length (2 mm).

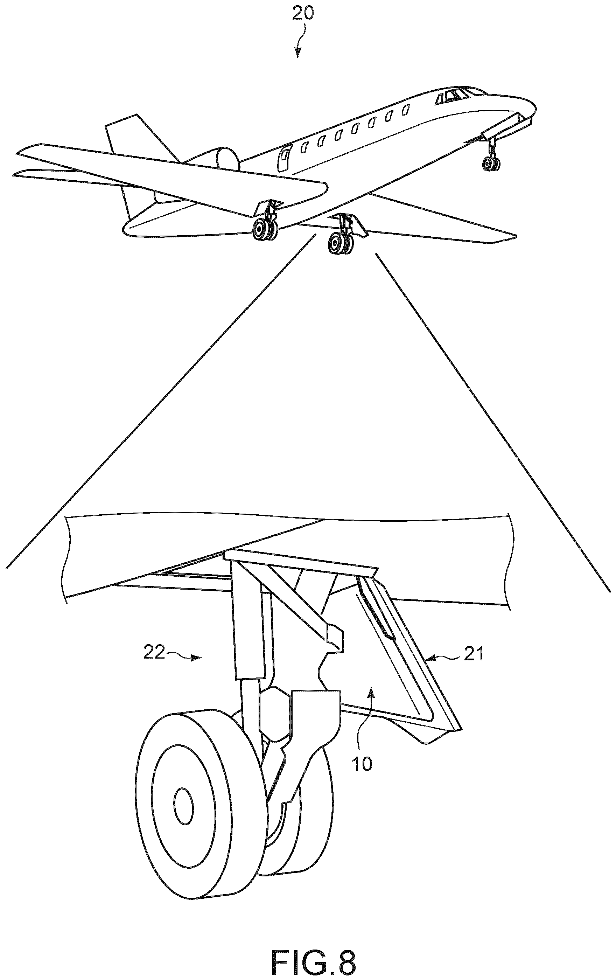

Fig. 8 shows a porous structure 10 attached to an aircraft 20. As shown in Fig. 8, the porous structure 10 (e.g., made of metal) is attached to the inner surface of a landing gear door 21 of the aircraft 20. When this porous structure 10 is manufactured, the airflow is first analyzed based on conditions such as the flight speed and flight altitude of the aircraft 20 when the landing gear door 21 is open (during takeoff and landing). hexahedral elements 3 with varying shapes suitable for aerodynamic noise reduction under those conditions is then generated by MEGG3D, and the porous structure 10 is manufactured accordingly.

Attaching the porous structure 10 to the inner surface of the landing gear door 21 of the aircraft 20 makes it possible to reduce aerodynamic noise caused by the landing gear 22 or landing gear door 21.

In this example, the aircraft 20 is used as an object to which the porous structure 10 is attached, but the object is not limited to aircraft 20. For example, the object may be an automobile, railroad vehicle, or the like. Typically, an object to which the porous structure 10 is attached may be any object with a problem of aerodynamic noise. Additionally, the porous structure 10 can be attached to any location.

### <Actions, Etc.>

Next, the actions etc. in the porous structure 10 according to this embodiment are described, including comparative examples.

### [First Comparative Example]

The first comparative example assumes that a ready-made metal product, Celmet (registered trademark: manufactured by Sumitomo Electric Toyama Co., Ltd.), is used as the porous structure 10 (see Example 4 in paragraph [0055] of Patent Literature 1 mentioned above).

Using the ready-made metal product Celmet as a porous structure 10 presents some difficulties. Its sharp skeletal structure protrudes from the surface, making it difficult to handle. Additionally, adapting the porous structure 10 to fit the shape of the object that it will be attached to is problematic. Finally, securing the porous structure to the object poses further difficulties.

### [Second Comparative Example]

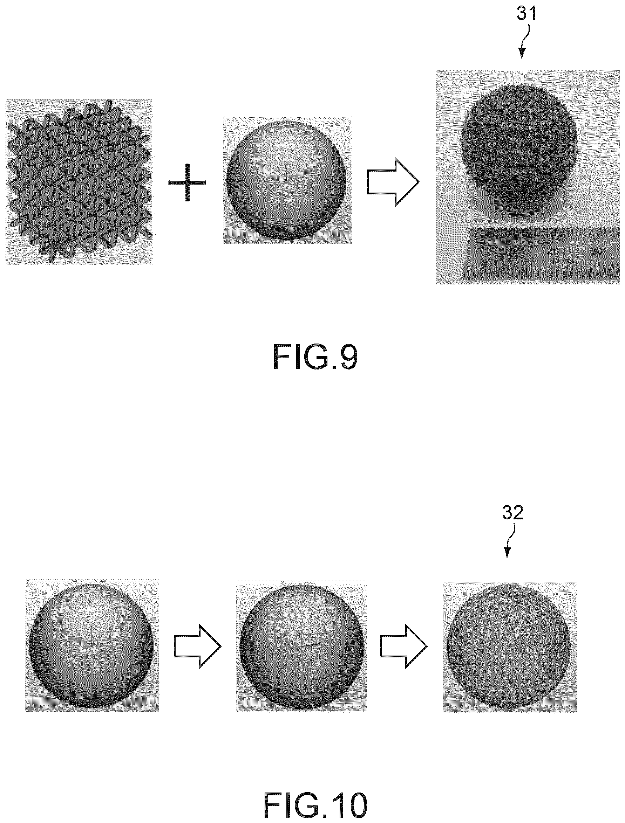

Fig. 9 shows the second comparative example. In this example, a lattice structure by a 3D printer proposed by JAMPT Corporation (registered trademark) is assumed to be used as the porous structure 10.

In the second comparative example, as shown in Fig. 9, a lattice shape that serves as a basic unit is first created. This lattice shape is then arranged in 3D to generate data representing a modeled object as a simple cuboid (shown on the left side of Fig. 9). The next step is to create the shape data for an arbitrary modeling object, which will indicate the shape of the final modeling object (e.g., sphere: center of Fig. 9).

Next, superimposing those two pieces of data is performed in conversion software. The data is then exported to a 3D printer, and a modeled object 31 is fabricated by the 3D printer (right side of Fig. 9).

If this modeled object 31 is used as the porous structure 10, curved surface portions are missing, resulting in a sharp skeletal structure that protrudes from the surface and makes it difficult to handle.

### [Third Comparative Example]

Fig. 10 shows the third comparative example. Similar to the second comparative example, a lattice structure by a 3D printer, proposed by JAMPT Corporation (registered trademark), is assumed to be used as the porous structure 10**.**

In the third comparative example, the edges of triangles in STL data are used to form a modeled object 32. This modeled object 32 consists solely of a surface structure, which presents significant limitations: no internal structure can be formed. Another problem is that only a triangular lattice can be generated on the surface.

### [Fourth Comparative Example]

The fourth comparative example assumes that a lattice structure created with design software for a 3D printer is used as a porous structure. In this example, the design software automatically generates the lattice structure by adjusting parameters, such as density and thickness, based on a predetermined pattern function related to the target modeled object.

In the fourth comparative example, it is possible to create a lattice structure that conforms to a target shape, including curves and similar features. However, a problem arises in producing a structure that reduces aerodynamic noise reduction.

### [This Embodiment]

According to this embodiment, a porous structure 10 is generated by the 3D printer based on data that defines a suitable design for reducing aerodynamic noise under specific conditions. The data is derived from software that generates mesh structures used in computational fluid dynamics.

This embodiment allows for the straightforward creation of a porous structure 10 that effectively reduces aerodynamic noise. The sharp skeletal structure also does not protrude from the surface, making the porous structure 10 easy to handle.

In this embodiment, the porous structure 10 is created using a 3D printer, allowing for easy customization according to the shape of the object that it will be attached to. This feature facilitates the attachment of the porous structure 10 to objects with complicated shapes. Furthermore, incorporating mounting seats into the 3D model of the porous structure 10 simplifies securing it to the object.

Additionally, in the porous structure 10, the porosity can be partially adjusted. In this case, the aerodynamic noise reduction effect can be optimized.

In this embodiment, the porous structure 10 is created from a mesh with hexahedral elements **3.** Using these hexahedral elements 3 makes achieving a high porosity that effectively reduces aerodynamic noise possible.

The porous structure 10 in this embodiment is created by dividing tetrahedral elements 2 into multiple hexahedral elements **3.** This division method allows for the easy formation of a porous structure 10 composed of these hexahedral elements **3.**

The porous structure 10 in this embodiment includes, for each of the four triangles of every tetrahedral element 2 includes three column elements 1 that connect three first points on the three column elements 1 of the triangle and a single second point inside the triangle (12 column elements 1 in total). The porous structure 10 also includes four column elements 1 that connect the four second points inside the four triangles of the tetrahedral element 2 and a single third point inside the tetrahedral element **2.**

This approach makes it possible to obtain porous structure 10 with hexahedral elements 3 converted from the structure with tetrahedral elements 2.

### Reference Signs List

- 1: column element
- 2: tetrahedral element
- 3: hexahedral element
- 10: porous structure

## Claims

1. A porous structure created by a three-dimensional printer based on data suitable for aerodynamic noise reduction under specific conditions, the data created based on software for creating mesh structures used in computational fluid dynamics.

2. The porous structure, according to claim 1, wherein
the porous structure is formed of a mesh with hexahedral elements.

3. The porous structure, according to claim 2, wherein
the hexahedral elements are formed by dividing tetrahedral elements into multiple hexahedral elements.

4. The porous structure, according to claim 3, wherein
when the tetrahedral elements are divided into multiple hexahedral elements, for each of the four triangles of every tetrahedral element, three column elements are added, the three column elements connecting three first points on the three column elements of the triangle and a single second point inside the triangle.

5. The porous structure, according to claim 4, wherein
when the tetrahedral elements are divided into multiple hexahedral elements, four column elements are further added for every tetrahedral element, the four column elements connecting the four second points inside the four triangles of the tetrahedral element and a single third point inside the tetrahedral element.

6. The porous structure, according to claim 1, wherein
the porous structure is formed according to the shape of an object to which the porous structure is to be attached.

7. The porous structure, according to claim 1, wherein
the porous structure includes mounting seats for attaching the porous structure to an object.

8. The porous structure, according to claim 3, wherein
in the software, preliminary data of the porous structure in which tetrahedral elements are used for discretization is generated, the tetrahedral elements in the preliminary data are divided into multiple hexahedral elements, and data of the porous structure in which the hexahedral elements are used for discretization is generated.

9. The porous structure, according to claim 8, wherein
in the software, when the tetrahedral elements are divided into multiple hexahedral elements, for each of four triangles of every tetrahedral element, three column elements are added, the three column elements connecting three first points on the three column elements of the triangle and a single second point inside the triangle.

10. The porous structure, according to claim **9,** wherein
in the software, when the tetrahedral elements are divided into multiple hexahedral elements, four column elements are further added for every tetrahedral element, the four column elements connecting the four second points inside the four triangles in the tetrahedral element and a single third point inside the tetrahedral element.

11. The porous structure, according to claim **1,** wherein
the software is MEGG3D.

12. The porous structure, according to claim **1,** wherein
the porous structure is used in the aircraft.

13. A porous structure for aerodynamic noise reduction; the porous structure is formed of a mesh with hexahedral elements, and the hexahedral elements are formed by dividing tetrahedral elements into multiple hexahedral elements.

14. A method of manufacturing a porous structure comprising:
creating data of a porous structure suitable for aerodynamic noise reduction under specific conditions based on software for creating mesh structures used with computational fluid dynamics and
creating a porous structure by a three-dimensional printer based on the created data.
